# FASCICULE DE BREVET EUROPEEN

(11) **EP 1 986 531 B1**
(45) Date de publication et mention de la délivrance du brevet: **15.12.2010**
(21) Numéro de dépôt: 07730977.1
(22) Date de dépôt: 14.02.2007
(51) Int. Cl.: A47J 36/02

(54) **ARTICLE CULINAIRE EMAILLE ET ANODISE ET PROCEDE DE FABRICATION D'UN TEL ARTICLE**
EMAILLIERTER UND ELOXIERTER KÜCHENARTIKEL UND VERFAHREN ZU SEINER HERSTELLUNG
ENAMELLED AND ANODISED CULINARY ITEM AND METHOD FOR PRODUCING ONE SUCH ARTICLE

(30) Priorité: 14.02.2006 FR 0601313; 05.12.2006 FR 0610610
(43) Date de publication de la demande: 05.11.2008
(73) Titulaire: SEB SA, 69130 Ecully (FR)
(72) Inventeur: CUILLERY, Pascal, 74210 Faverges (FR); PARENT, Fabrice, 73100 Aix les Bains (FR); BRASSET, Jean-François, 74100 Annecy (FR); MULLER, Pierre-Jean, 74540 Saint-Félix (FR)
(74) Mandataire: Somnier, Jean-Louis
(86) Numéro de dépôt international: PCT/FR2007/000266
(87) Numéro de publication internationale: WO 2007/093706

(56) Documents cités:
- EP-A2- 0 323 349
- DE-A1- 4 434 425
- FR-A1- 2 266 722
- GB-A- 2 370 975
- US-A- 3 927 243
- US-A1- 2005 205 582

## Description

La présente invention concerne un article culinaire émaillé et anodisé, ainsi qu'un procédé de fabrication d'un tel article.

Les articles culinaires comprennent généralement une calotte creuse définissant un fond et une paroi latérale, et présentant une face intérieure destinée à recevoir dés aliments et une face extérieure destinée à être disposée du côté de la source de chaleur. L'une au moins des faces de la paroi latérale de ces articles culinaires peut être recouverte par une couche d'anodisation.

Cette couche d'anodisation permet de durcir superficiellement La surface revêtue et de la rendre particulièrement résistante aux chocs et facile à nettoyer. En outre, la couche d'anodisation confère à la surface revêtue par la couche d'anodisation un aspect analogue à celui de l'ardoise, visuellement doux au toucher, et qui a une apparence moins froide qu'une surface lisse en aluminium ou en alliage d'aluminium.

Ces articules culinaires peuvent également présenter sur leur face extérieure, une couche d'émail qui confère à la surface ainsi revêtue à la fois de la finition esthétique, de la dureté et de la résistance à l'abrasion.

L'intérêt de combiner des traitements d'anodisation et d'émaillage est connu dans l'état de l'art.

Toutefois, étant donné que l'adhésion d'un émail sur une couche d'anodisation est connue pour être très mauvaise, le procédé de fabrication d'un article culinaire émaillé et anodisé, par exemple une poêle, doit nécessairement comprendre une étape d'émaillage préalable au traitement d'anodisation.

Or, l'homme de l'art sait que les émaux sont traditionnellement altérés par le traitement d'anodisation, avec une perte significative au niveau des qualités esthétiques de l'émaillage. Pour pallier ce problème, on réalise un deuxième traitement d'émaillage après le traitement d'anodisation pour former une seconde couche d'émail dite de finition sur celle formée préalablement au traitement d'anodisation.

Ainsi, le brevet américain US 6,749,081 décrit un procédé de traitement de surface d'un article culinaire en aluminium ou en alliage d'aluminium, qui comprend les étapes successives suivantes :
- une première étape d'émaillage de la surface extérieure de l'article, puis
- une étape d'anodisation de la surface intérieure de l'article à l'aide d'une solution d'acide sulfurique, et
- une deuxième étape d'émaillage de la surface extérieure préalablement émaillée, pour former une couche d'émail de décoration.

La deuxième étape d'émaillage dans le procédé de US 6,749,081 a pour effet de compenser les dommages subis par la première couche d'émail lors de l'étape d'anodisation, et en particulier de restituer les qualités esthétiques de l'émaillage perdues lors de l'anodisation.

Toutefois, l'expérience montre qu'un article culinaire obtenu par un tel procédé présente une résistance insuffisante aux détergents utilisés dans les lave-vaisselle.

En outre, la réalisation d'un article culinaire émaillé et anodisé selon le procédé de US 6,749,081, est difficile à mettre en oeuvre, car ce procédé comprend deux étapes d'émaillage, séparées par une étape d'anodisation, ce qui implique des coûts d'installation et de mise en oeuvre élevés liés à la nécessité de cette deuxième étape d'anodisation.

Or, la demanderesse a trouvé de manière surprenante qu'il était possible de résoudre ces problèmes en contrôlant l'intégrité dé la couche d'émail, ainsi que l'uniformité de son épaisseur, ce qui permet ainsi de supprimer la couche d'émail de finition.

Plus particulièrement, la demanderesse a trouvé qu'une couche d'émail est capable de résister à un traitement d'anodisation ultérieur si elle présente les caractéristiques suivantes :
1) une composition comprenant 1,5 à 9 % en poids par rapport au poids total de la couche d'émail d'au moins un élément fondant choisi dans le groupe constitué par l'oxyde de plomb PbO, l'oxyde de bismuth Bi₂O₃ et le pentoxyde de vanadium V₂O₅ ;
2) une épaisseur de couche sensiblement uniforme, avec une valeur moyenne d'épaisseur comprise entre 15 et 40 µm et un écart par rapport à cette valeur moyenne d'au plus 10%.

La demanderesse a également trouvé qu'il était possible de réaliser une telle couche par l'application puis la cuisson d'au moins une couche de pâte anhydre d'une fritte d'émail pulvérulente dispersée dans un milieu non aqueux.

Les caractéristiques esthétiques apportées par une telle couche d'émail rendent inutile la réalisation d'une couche d'émail de finition.

La présente invention a ainsi pour objet un article culinaire comprenant une calotte creuse définissant un fond et une paroi latérale s'élevant à partir dudit fond, ladite calotte présentant une face intérieure pouvant recevoir des aliments et une face extérieure destinée à être disposée du côté de la source de chaleur, ladite calotte comportant une feuille en aluminium ou en alliage d'aluminium.

Selon l'invention, la face extérieure au moins de la paroi latérale est en aluminium anodisé ou en alliage d'aluminium anodisé, et la face extérieure du fond est recouverte au moins en partie par une couche d'émail ayant une épaisseur sensiblement uniforme dont la valeur moyenne est comprise entre 15 et 40, µm, de préférence entre 20 et 30 µm, avec un écart par rapport à cette valeur moyenne d'épaisseur d'au plus 10%, cette couche d'émail comprenant 1,5 à 9 % en poids par rapport au poids total de la couche d'émail d'au moins un élément fondant choisi dans le groupe constitué par l'oxyde de plomb PbO, l'oxyde de bismuth Bi₂O₃ et le pentoxyde de vanadium V₂O₅.

De préférence, l'élément fondant est le pentoxyde de vanadium V₂O₅, présent à raison de 2 à 7 % en poids par rapport au poids total de la couche d'émail.

Dans une version particulièrement avantageuse de l'invention, la couche d'émail comprend 4 à 6 % en poids de pentoxyde de vanadium V₂O₅ par rapport au poids de la couche d'émail. Cette gamme de teneur en vanadium dans la couche d'émail garantit à la couche d'émail une résistance élevée aux attaques acides, et donc à un traitement d'anodisation à l'acide sulfurique.

De manière avantageuse, la feuille en aluminium ou en alliage d'aluminium est une feuille emboutie présentant la forme finale de l'article culinaire selon l'invention.

Par aluminium ou alliage d'aluminium, on entend au sens de la présente invention un matériau métallique comprenant de l'aluminium, qui remplit les critères d'aptitude au contact alimentaire conformément à l'arrêté du 27 aout 1987.

A titre d'alliages d'aluminium utilisables selon la présente invention, on peut notamment citer les alliages connus pour leur aptitude à l'émaillage, par exemple les alliages 3003, 4006 et 4700. L'alliage d'aluminium préféré est l'alliage 3003.

Une fritte d'émail qui n'est pas formulée sous forme de pâte anhydre ne permet pas d'obtenir les caractéristiques de la couche d'émail précitées.

Par ailleurs, si la teneur en élément fondant dans la couche d'émail est inférieure à 1,5 % en poids par rapport au poids total de cette couche, cette dernière est très poreuse et son intégrité n'est pas garantie. Par contre, si la teneur en élément fondant dans la couche d'émail est supérieure à 9 % en poids par rapport au poids total de cette couche, la couche d'émail ne résiste pas aux attaques acides.

Si la valeur moyenne de l'épaisseur de la couche d'émail est inférieure à 15 µm (après cuisson), la couche d'émail n'est pas assez étanche et présente une résistance insuffisante aux attaques acides, et donc à une anodisation à l'acide sulfurique.

Dans une version avantageuse de l'invention, la face intérieure de l'article culinaire selon l'invention peut être pourvue d'un revêtement anti-adhésif, qui est disposé dé manière à être en contact direct avec la feuille d'aluminium. Ce revêtement anti-adhésif peut être obtenu à partir d'une composition comprenant une résine thermostable résistant à au moins 200°C.

Une telle résine thermostable résistant à au moins 200°C comprend classiquement une résine fluorocarbonée, seule ou mélangée avec une ou plusieurs autres résines thermostables résistant à au moins 200°C.

Cette résine fluorocarbonée, dont les propriétés hydrophobes sont reconnues, peut être du polytétrafluoroéthylène (PTFE), du copolymère de tétrafluoroéthylène et de perfluoropropylvinyléther (PFA) ou du copolymère de tétrafluoroéthylène et d'hexafluoropropylène (FEP) ou un mélange de ces résines fluorocarbonées.

Les autres résines thermostables résistant à au moins 200°C peuvent être un polyamide imide (PAI), une sulfone de polyéthylène (PES), un sulfure de polyphénylène (PPS), une polyéthercétone (PEK), ou une polyétheréthercétone (PEEK).

Ces résines thermostables présentent donc l'avantage particulier de résister à un traitement d'anodisation.

La présente invention concerne également un procédé de fabrication d'un article culinaire selon l'invention.

Plus particulièrement, la présente invention a pour objet un procédé de fabrication d'un article culinaire comprenant un fond et une paroi latérale se dressant à partir du fond en aluminium ou en alliage d'aluminium., qui comprend les étapes suivantes :
a) mise en forme, par emboutissage, d'une feuille (5) en aluminium ou en alliage d'aluminium pour lui conférer la forme finale de l'article culinaire et ainsi définir la face intérieure de l'article culinaire, destinée à la cuisson des aliments, et la face extérieure de l'article culinaire destinée à être disposée du côté de la source dé chaleur ; et
b) une étape de réalisation d'une coche d'émail sur toute ou partie de la face extérieure du fond de l'article culinaire, et
c) une étape d'anodisation de l'article culinaire. Selon l'invention, l'étape b), réalisée avant l'étape c) d'anodisation, constitue l'unique étape d'émaillage de la face extérieure du fond de l'article culinaire de l'invention, cette étape d'émaillage b) comportant les étapes successives suivantes :
   i. préparation d'une pâte anhydre à partir d'une fritte d'émail pulvérulente qui comprend 0,82 à 6,75 % en poids par rapport au poids total de la pâte d'au moins un élément fondant choisi dans le groupe constitué par l'oxyde de plomb PbO, l'oxyde de bismuth Bi₂O₃ et le pentoxyde de vanadium V₂O₅, ladite pâte étant formulée sous forme d'une dispersion dans un milieu non aqueux ;
   ii. application de la pâte anhydre sur la face extérieure du fond de l'article culinaire en au moins une couche;
   iii. cuisson de la couche de pâte à une température comprise entre 540°C et 575°C, et de préférence à une température d'environ 560°C, pour former une couche d'émail qui présente après cuisson une épaisseur sensiblement uniforme dont la valeur moyenne est comprise entre 15 et 40 µm avec un écart par rapport à cette valeur moyenne d'épaisseur d'au plus 10%.

Pour réaliser un article culinaire conforme à l'invention, on utilise de préférence une pâte anhydre comportant 1,1 à 5,25 %, et mieux 2,2 à 4,5 % en poids de pentoxyde de vanadium V₂O₅ par rapport au poids total de la pâte.

Dans le procédé de l'invention, la seule étape de réalisation d'une couche d'émail est réalisée avant l'étape d'anodisation, ce qui a pour effet de réduire la surface d'aluminium exposée à l'anodisation. Etant donné que le coût de l'anodisation est directement proportionnel à la surface d'aluminium exposée dans le bain d'anodisation, le procédé de l'invention présente l'avantage d'être peu coûteux.

La formulation de la fritte d'émail sous forme d'une pâte anhydre permet d'obtenir une couche d'émail offrant une résistance à un traitement d'anodisation ultérieur qui est supérieur à celle d'une couche d'émail obtenue d'une barbotine (c'est-à-dire une fritte d'email dispersée en milieu aqueux), et qui permet donc de s'affranchir de la réalisation d'une étape d'émaillage suite à l'anodisation sans perte au niveau des qualités esthétiques de l'émaillage. La suppression de cette étape d'émaillage après l'anodisation permet aussi de réduire le coût d'un tel procédé associant anodisation et émaillage.

Ce procédé présente également l'avantage d'être compatible avec n'importe quelle nuance d'aluminium ou d'alliage d'aluminium. De préférence, on utilise à titre d'alliages d'aluminium les alliages 3003, 4006, et 4700. L'alliage d'aluminium préféré est l'alliage 3003.

De manière avantageuse, la pâte anhydre comprend 55 à 75% en poids de fritte d'émail pulvérulente par rapport au poids total de la pâte. En effet, si la pâte contient plus de 75% en poids de fritte d'émail par rapport au poids total de la pâte, celle-ci est trop visqueuse et ne peut d'étaler facilement. Par contre, si la pâte contient moins de 55% en poids de fritte, la pâte est beaucoup trop fluide et nécessite d'être déposée en plusieurs couches successives pour arriver à une couche d'émail, après cuisson, ayant une épaisseur suffisante pour résister aux attaques acides, ce qui augmente d'autant le coût global du procédé.

De manière préférée, la pâte anhydre comprend 65 % en poids de fritte d'émail pulvérulente par rapport au poids total de la pâte anhydre. Une telle pâte possède une fluidité suffisante pour s'étaler facilement lors de son application, ainsi qu'une consistance suffisante également pour permettre l'application d'une couche unique pour réaliser une couche d'émail après cuisson d'une épaisseur moyenne d'au moins 15 µm.

Si la fritte d'émail.ne se présente pas sous forme pulvérulente, par exemple sous forme d'écailles, il faudra prévoir dans le procédé de fabrication de l'invention une étape supplémentaire de broyage à sec de la fritte d'émail.

Selon une version particulièrement avantageuse de l'invention, la fritte d'émail comprend :
○ SiO₂ : 30 à 38 % ;
○ V₂O₅ : 3 à 7 % ;
○ NaOH : 15 à 25 % ;
○ LiOH : 0.5 à 4 % ;
○ KOH : 8 à 17 % ;
○ TiO₂ : 18 à 25 % ;
les teneurs indiquées étant des pourcentages en poids par rapport au poids de la fritte.

Dans la pâte anhydre destinée à former la couche d'émail, la fritte d'émail est dispersée dans un milieu non aqueux, qui peut être un milieu huileux ou un solvant, de préférence à point d'ébullition élevé (notamment supérieur à 150°C) et de préférence le terpinéol, le white spirit (solvant d'origine minérale, distillant généralement entre 130 et 200°C) et leurs mélanges. Outre la fritte d'émail, la pâte anhydre selon l'invention peut également comprendre des éléments d'addition tels que des pigments, des charges, et/ou des opacifiants.

La pâte anhydre destinée à former la couche d'émail peut être appliquée de diverses manières sur la surface extérieure de l'article culinaire selon l'invention, et notamment par pulvérisation (pistolage), au rideau, par sérigraphie ou encore par tampographie. De manière préférée, cette application est réalisée par sérigraphie ou tampographie.

La viscosité de la pâte anhydre est adaptée en fonction de la technique d'application de la pâte qui est choisie. Ainsi, une pâte présentant une viscosité de 2000 à 8000 Cp mesurée par un viscosimetre de type cône plan sera de préférence appliquée par sérigraphie ou par tampographie.

La pâte anhydre peut être appliquée sur la surface extérieure de l'article culinaire en une couche unique ou en plusieurs couches.

Selon un premier mode de réalisation de l'invention, la pâte anhydre est appliquée en une couche unique de manière à former une couche d'émail présentant après cuisson une épaisseur moyenne comprise entre 15 et 30 µm.

Selon un deuxième mode de réalisation de l'invention, la pâte anhydre est appliquée en bicouche, de manière à réaliser une couche d'émail présentant après cuisson une épaisseur comprise entre 25 et 40 µm.

A titre d'exemple d'application de la pâte anhydre en bicouche, on peut par exemple envisager d'appliquer une première couche de pate anhydre par sérigraphie pour donner une épaisseur humide d'environ 25 microns. Cette pâte est ensuite séchée à 80°C pendant 30s, pour donner un « biscuit » sur lequel est appliqué également par sérigraphie une seconde couche de pâte anhydre d'épaisseur humide environ 25 microns. Cette couche est également séchée: Puis, l'ensemble des 2 couches est étuvé 10 minutes à 560°C pour donner un email vitrifié d'épaisseur 35 microns.

La dernière étape d'anodisation est classiquement réalisée par trempage de l'article culinaire dans un bain d'acide sulfurique, seul ou en mélange avec de l'acide oxalique, et avec une température du bain d'acide de -5°C à 25°C. La tension continue appliquée sur l'article peut varier entre 10 et 100 V.

De préférence, l'anodisation est une anodisation dite « dure », réalisée dans un bain d'acide sulfurique dont la température est de -5°C.

Avantageusement, on procède, après l'étape b) d'émaillage et avant l'étape c) d'anodisation de l'article culinaire, au dépôt sur la face intérieure de l'article culinaire d'au moins une couche destinée à former, après cuisson, un revêtement anti-adhésif. Ce revêtement anti-adhésif est de préférence obtenu à partir d'une composition comprenant une résine thermostable résistant à au moins 200°C, et de préférence une résine silicone ou une résine fluorocarbonée telle que du PTFE.

Dans ce cas, le dépôt d'un revêtement antiadhésif sur la face intérieure de l'article culinaire permet de réduire le coût de l'anodisation en jouant le rôle de masque.

Toutefois, il est également possible de réaliser un dépôt d'un revêtement antiadhésif sur la face intérieure de l'article culinaire postérieurement à l'étape c) d'anodisation. Dans ce cas, la couche d'anodisation sur face intérieure constitue une sous-couche renforçante pour le revêtement antiadhésif.

L'anodisation est généralement achevée par une étape de colmatage hydrothermal, dont le principe consiste à transformer l'alumine Al₂O₃ formé pendant l'anodisation en alumine monohydraté. Cela pour conséquence de réduire la porosité de la couche d'anodisation. Ce traitement est réalisé par trempage dans un bain d'eau dont la température minimale est de 90°C et le pH compris entre 5.5 et 6.5.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'invention selon une première variante de réalisation,
- la figure 2 représente une vue schématique en coupe d'un article culinaire conforme à l'invention selon une deuxième variante de réalisation,
- la figure 3 représente une vue schématique en coupe d'un article culinaire conforme à l'invention selon une troisième variante de réalisation
- la figure 4 représente une vue schématique de dessous et en plan de l'article culinaire représenté à la figure 3,
- la figure 5 représente une vue schématique en coupe d'un article culinaire conforme à l'invention selon un quatrième mode de réalisation,
- la figure 6 représente une vue schématique de dessous et en plan du fond d'un article culinaire selon une cinquième variante de réalisation.

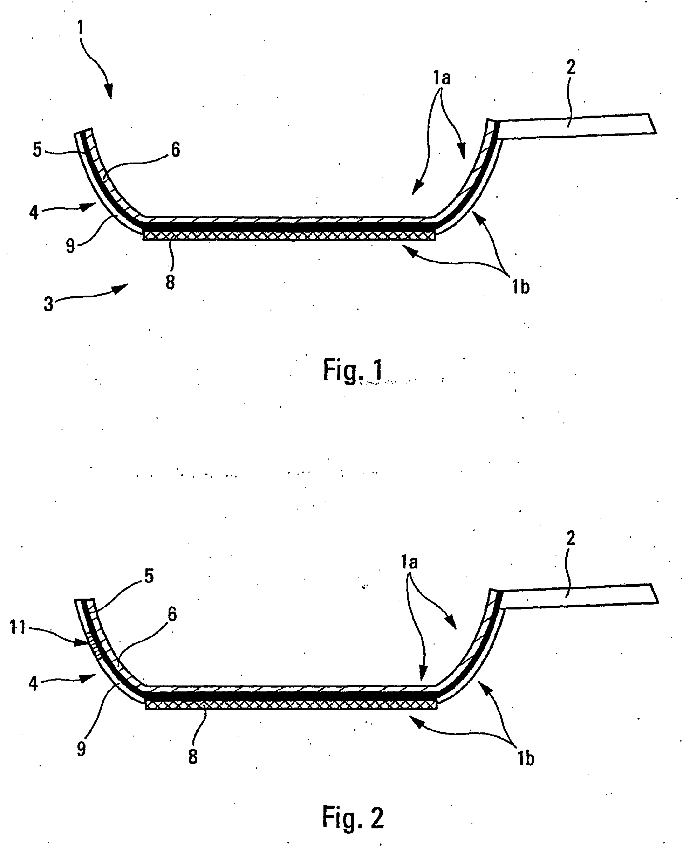

Les éléments identiques représentés sur les figures 1 à 4 sont identifiés par des références numériques identiques.

Sur les figures 1 à 4, on a représenté, à titre d'exemple d'article culinaire, une poêle 1, qui comprend une poignée de préhension 2, un fond 3 et une paroi latérale 4 s'élevant à partir du dit fond 3. Le fond 3 et la paroi latérale 4 sont réalisés à partir d'une feuille 5 présentant la forme d'un disque. Cette feuille 5, qui est en aluminium ou en alliage d'aluminium, est emboutie de manière à présenter la.forme finale de la poêle 1. La poêle 1 comprend une face intérieure la destinée à la cuisson des aliments et une face extérieure 1b destinée à être disposée du côté de la source de chaleur, telle qu'une plaque de cuisson ou un brûleur. La face intérieure la de la poêle 1 est recouverte intégralement par un revêtement antiadhésif 6.

Sur les figures 1 et 2, la face extérieure 1b du fond 3 est entièrement recouverte par une couche d'émail 8 selon l'invention.

Dans la variante illustrée sur la figure 1, la face extérieure 1b de la paroi latérale 4 est intégralement recouverte par une couche d'anodisation 9.

Dans la variante illustrée sur la figure 2, la face extérieure 1b de la paroi latérale 4 comprend une couche d'anodisation 9, qui est interrompue par un décor ou des motifs 11 en émail.

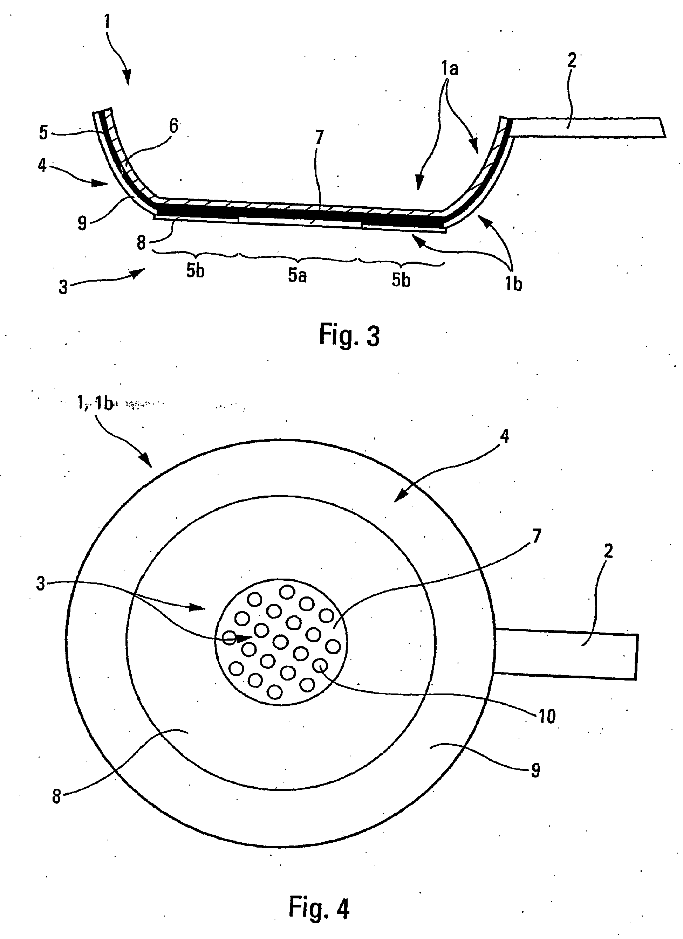

Dans la variante illustrée sur les figures 3 et 4, la face extérieure 1b du fond 3 comprend une plaque 7 centrée sur le fond 3 et recouvrant une portion 5a de la feuille 5, ainsi qu'une couche d'émail 8 recouvrant une portion 5b de la feuille 5.

La plaque 7 est réalisée en un métal ou en un matériau revêtu d'un métal. Dans les deux cas, le métal de la plaque 7 ou le métal revêtant le matériau est choisi de telle sorte qu'il résiste à une étape d'anodisation, c'est-à-dire qu'il ne soit pas dégradé par le traitement dans le bain d'anodisation à base d'acide sulfurique.

Ainsi, le métal de la plaque est plus particulièrement choisi parmi les métaux de transition tels que le titane, le zirconium ou le niobium, et est, de préférence, le titane.

La plaque 7 peut également être formée d'un matériau recouvert de métal, le matériau constituant le coeur de la plaque 7 étant avantageusement choisi parmi l'acier, l'acier inoxydable, ferritique ou non. Le métal qui recouvre ledit matériau est choisi parmi les métaux de transition tels que le titane, le zirconium, le niobium, ou alors par un carbure ou un nitrure d'un métal de transition tel que le titane, le zirconium ou le niobium.

Lorsque l'on utilise un matériau présentant des propriétés ferromagnétiques, la poêle 1 selon l'invention présente l'avantage de pouvoir être utilisable avec un moyen de chauffage par induction. Un matériau convenant pour une telle utilisation est notamment l'acier inoxydable AISI 430.

Dans cette dernière hypothèse, la plaque 7 sera ajourée et s'étendra de préférence sur toute la surface de la face extérieure 1b du fond 3.

La plaque 7 peut éventuellement être composée de plusieurs éléments et donc ne pas être unitaire. Elle est généralement complètement encastrée dans la feuille 5, de manière que la surface de la plaque 7 soit affleurante avec celle de la plaque.

Comme représenté de manière visible sur la figure 4, la plaque 7 comprend de manière particulièrement avantageuse des trous 10. Ces trous 10 peuvent être revêtus de la couche d'émail 8 selon l'invention ou, au contraire, laissés libres et donc être en aluminium anodisé ou en alliage d'aluminium anodisé.

Si les trous 10 sont revêtus d'une couche d'émail 8, celui-ci est de préférence transparent au niveau de la plaque 7, pour que celle-ci soit visible pour le consommateur.

Dans la variante illustrée sur les figures 3 et 4, la face extérieure 1b du fond 3 est entièrement recouverte par la plaque 7 et la couche d'émail 8, déposée au niveau de la portion 5b du fond 3 et dans les trous 10.

On peut cependant tout à fait envisager que les surfaces de la face extérieure 1b du fond 3 qui ne sont pas recouvertes par la plaque 7 et par la couche d'émail 8, sont en aluminium anodisé ou en alliage d'aluminium anodisé, comme représenté sur la figure 4 que l'on détaillera ci-après.

Pour les raisons déjà invoquées dans les demandes de brevet FR 2 711 050 et FR 2 711 051, que cela soit pour un article culinaire 1 compatible ou non avec un mode de cuisson par induction, la plaque 7 recouvre entre 5 et 30% de la surface totale du fond 3. Une telle valeur de 30% n'est toutefois pas limitative lorsque l'on recherche à obtenir un article culinaire présentant également des propriétés ferromagnétiques.

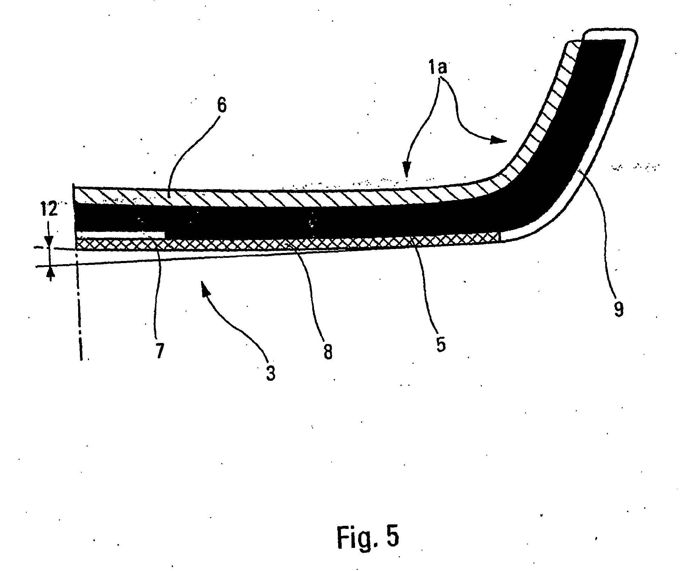

Dans une variante plus particulièrement privilégiée représentée sur la figure 5, la feuille 5 est emboutie de manière à conférer une légère concavité 12 au fond 3 de l'article culinaire 1. Toutefois, dans cette dernière hypothèse, lorsque l'article culinaire 1 est disposé sur une plaque de cuisson, la surface portante du fond 3, en général annulaire et dite "diamètre de portée", est intégralement revêtue de la couche d'émail 8 selon l'invention pour éviter toute usure prématurée du fond 3 qui se produirait dans le cas où ce diamètre de portée serait laissé en aluminium anodisé ou en alliage d'aluminium anodisé. Un tel article culinaire présente donc un double avantage, d'une part, de ne pas se déformer et, d'autre part, de résister à l'usure et ainsi, de ne pas provoquer de rayures ou de marques sur une plaque de cuisson vitrocéramique, notamment.

Le traitement d'anodisation peut ensuite être suivi d'une étape de colmatage hydrothermal, qui est réalisé par trempage dans un bain d'eau dont la température minimale est de 90°C et le pH compris entre 5.5 et 6.5.

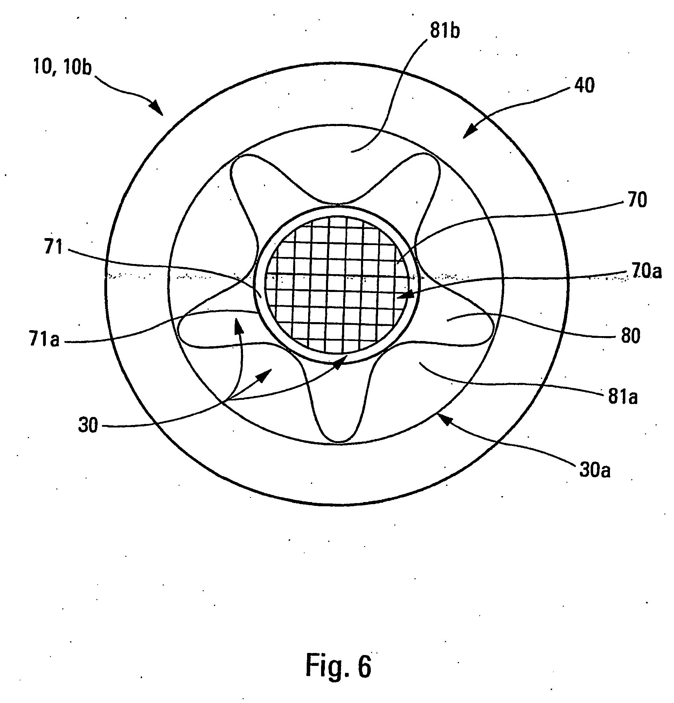

Dans la variante représentée à la figure 6, le fond 30 de l'article culinaire 10 comprend une plaque 70 se présentant sous la forme d'une grille encastrée dans la feuille d'aluminium ou d'alliage d'aluminium et centrée sur le fond 30.

Pour rendre l'article culinaire 10 compatible avec un mode de chauffage par induction, on peut employer une plaque que l'on dote de propriétés ferromagnétiques, soit directement par le métal de la plaque 70, métal qui doit par ailleurs répondre aux exigences de résistance à l'anodisation, soit indirectement par le matériau, dans le cas où la plaque 70 est formée par un matériau revêtue de métal.

A la périphérie 70a de la grille 70, est ménagée une gorge annulaire 71. Au niveau de la portion comprise entre la périphérie 71a de cette gorge annulaire 71 et la périphérie 30a du fond 30, le fond 30 comprend une couche d'émail selon l'invention 80 formant un motif et, en dehors des zones revêtues de cette couche d'émail 80, des surfaces 81a, 81b en aluminium anodisé ou en alliage d'aluminium anodisé.

La face extérieure 10b de la paroi latérale 40 est intégralement réalisée en aluminium anodisé ou en alliage d'aluminium anodisé.

On va maintenant détailler le procédé de fabrication d'un article culinaire conforme à l'invention. Ce procédé comprenant les étapes successives suivantes, lues en références aux figures 1 à 4 :
- mise en forme, par emboutissage, d'une feuille 5 en aluminium ou en alliage d'aluminium pour lui conférer la forme finale de l'article culinaire 1, 10 et ainsi définir sa face intérieure 1a, destinée à la cuisson des aliments, et sa face extérieure 1b, 10b, destinée à être disposée du côté de la source de chaleur,
- application, par matriçage, sur la face extérieure 1b, 10b, du fond 3, 30, d'une plaque 7, 70 destinée à recouvrir au moins une portion de la feuille 5, la plaque 7, 70 étant réalisée en un métal ou en un matériau revêtu d'un métal, ledit métal étant choisi de manière à résister à cette étape d'anodisation,
- application puis cuisson, sur tout ou partie de la portion de la feuille 5 non recouverte par la plaque 7, 70, que ce soit au niveau du fond 3, 30 ou de la paroi latérale 4, 40, d'au moins une couche de pâte anhydre conforme à l'invention, pour former, après cuisson, une couche d'émail résistant à l'anodisation,
- dépôt, au moins sur toute la face intérieure 1a de l'article culinaire 1, 10, d'au moins une couche destinée à former, après cuisson, un revêtement anti-adhésif 6, puis
- anodisation de l'article culinaire 1, 10.

La dernière étape d'anodisation est de préférence une anodisation dite "dure", réalisée dans un bain d'acide sulfurique à basse température, de préférence à une température de l'ordre de -5°C.

Comme déjà indiqué ci-dessus, on utilise un métal de transition tel que le titane, le zirconium ou le niobium pour le métal de la plaque 7, 70 et, le cas échéant, l'acier ou l'acier inoxydable, ferritique ou non, comme matériau revêtu du dit métal ou d'un carbure ou nitrure d'un tel métal.

On se reportera à la description faite ci-dessus pour les conditions d'obtention nécessaires pour former la couche d'émail selon l'invention 8, 80.

De nombreuses variantes peuvent être apportées à la présente invention, sans sortir du cadre de la présente invention.

En particulier, pour des raisons esthétiques, on peut envisager de doter la face extérieure 1b, 10b de la paroi latérale 4, 40 en aluminium anodisé d'un décor réalisé par dépôt d'une résine colorée.

Les exemples suivants illustrent également l'invention sans toutefois en limiter la portée.

### EXEMPLES

Dans les exemples, sauf indication contraire, toutes les quantités sont exprimées en partie en poids.

### Exemple 1

On a préparé une pâte anhydre selon l'invention PA1, à partir d'une fritte d'émail selon l'invention invention F1, dont la composition est indiquée ci-après dans le tableau 1.

A titre de comparaison, on a également préparé deux pâtes anhydres témoins PA01 et PA02, à partir de frittes d'émail témoins, F01 et F02 respectivement, dont les compositions sont également indiquées dans le tableau 1. Les frittes d'émail F01 et F02 sont dites « témoins » car, lorsqu'elles sont formulées sous forme de pâte anhydre, elles présentent un taux en élément fondant (V₂O₅ ou PbO) qui est en dehors de la gamme revendiquée.

**Tableau 1 :**

| Composition (%) | F1 selon l'invention | F01 témoin | F02 témoin |
|---|---|---|---|
| SiO₂ | 35 | 36 | 36 |
| V₂O₅ | 5 | 0 | 12 |
| PbO | 0 | 1,5 | 0 |
| NaOH | 21 | 21 | 20 |
| LiOH | 2 | 2 | 1 |
| KOH | 14 | 14 | 13 |
| TiO₂ | 23 | 25 | 20 |
| Total | 100 | 100 | 100 |

Les teneurs indiquées sont des pourcentages massiques par rapport au poids de la fritte.

La formulation des frittes F1, F01 et F02, sous forme de pâtes anhydres, respectivement, PA1, PA01, et PA02, est réalisée comme suit :
- à 100 parties en poids de frittes d'émail (F1, ou F01, ou F02), on ajoure
- 20 parties en poids d'oxyde de fer noir commercialisé par la société BAYER sous la dénomination commerciale 303T, et
- 35 parties en poids d'huile terpénique commercialisée par la société DRT.

Les compositions des pâtes anhydres PA1, PA01 et PA02 sont récapitulées dans le tableau 2.

**Tableau 2**

| Constituant Pate | ANHYDRE PA1 selon l'invention | Pate ANHYDRE PA01 témoin | Pate ANHYDRE PA02 témoin |
|---|---|---|---|
| Fritte A | 100 | 100 | 100 |
| Oxyde de fer noir 303T | 20 | 20 | 20 |
| Huile (terpénique) | 35 | 35 | 35 |
| Pourcentage massique d'élément fondant dans la pâte anhydre | 3,23 | 0,97 | 7,74 |

Chaque pâte anhydre PA1, PA01 et PA02 est ensuite appliquée en monocouche par sérigraphie, sur un support en aluminium. Puis, après un séchage à 80°C pendant 30 secondes, les pâtes sont étuvées pendant 10 minutes à 560°C, pour former des émaux vitrifiés. Les émaux vitrifiés EM1, EM01 et EM02 obtenus à partir des pâtes anhydres PA1, PA01 et PA02 respectivement, sont ensuite soumis à un test d'évaluation de la tenue aux acides, dont les résultats sont présentés dans le tableau 3.

La tenue aux acides est évaluée de la manière suivante :
o on dépose sur la surface émaillée une goutte d'un mélange d'acides comportant 100 g d'eau distillée, 20 g d'acide sulfurique concentré et 2g d'acide oxalique ;
o on laisse agir à température ambiante pendant 15 minutes ; puis
o on observe l'attaque de l'émail en surface.

Lorsque l'émail est attaqué, cela peut se manifester de diverses manières, par exemple un dépolissage, ou une perte de brillant et un tachage. Un émail résistant ne présente aucune de ces altérations, un émail non acceptable présente l'une au moins de ces altérations.

**Tableau 3**

| Emaux vitrifiés | EM1 selon l'invention | EM01 témoin | EM02 |
|---|---|---|---|
| Pourcentage massique d'élément fondant dans la couche d'émail | 4,17 | 1,25 | 10 |
| Tenue test acide | Pas de marques | Décoloration et perte de brillant | Dépolissage |

Les résultats montrent que si la pâte anhydre comprend moins de 2 % ou plus de 9 % en poids d'élément fondant (V₂0₅ ou PbO) par rapport au poids total de la pâte, les émaux (EM01 et EM02) obtenus à partir de ces pâtes anhydres résistent moins bien aux attaques acides qu'un émail selon l'invention (EM1).

### Exemple 2

On a préparé une barbotine à partir de la fritte d'émail selon l'invention F1, en mélangeant à 100 parties en poids de fritte A1, 56 parties en poids d'eau, 3,5 parties en poids d'acide borique, et 0,8 % en poids de carbonate de potassium.

Les formulations de la fritte F1 sous forme de barbotine BA1 et de pâte anhydre PA1, sont récapitulées dans le tableau 4.

**Tableau 4**

| Constituants | Pate ANHYDRE PA1 Selon l'invention | Barbotine BA1 |
|---|---|---|
| Fritte A | 100 | 100 |
| Oxyde de fer noir 303T | 20 | 10 |
| Eau | - | 56 |
| Acide Brique | - | 3.5 |
| Carbonate de Potassium | - | 0.8 |
| Huile MSR (terpénique) | 35 | - |

La pâte anhydre PA1 selon l'invention et la barbotine BA1 ont été appliquées en monocouche par sérigraphie sur des supports en aluminium.

La pâte PA1 et la barbotine BA1 sont ensuite séchées pendant 30s à 80°C, puis étuvées à 560°C pendant 10 minutes, pour donner les émaux vitrifiés EM1 de l'exemple 1 et EM03, respectivement. Ces émaux vitrifiés EM1 et EM03 sont ensuite soumis au test d'évaluation de la tenue aux acides, de la même manière qu'à l'exemple 1. Les résultats sont présentés dans le tableau 5.

**Tableau 5**

| Emaux vitrifiés | EM1 selon l'invention | EM03 témoin |
|---|---|---|
| Tenue test acide | Pas d'attaque visible | Décoloration |

La comparaison de la tenue au test acide de l'émail EM03 avec l'émail selon l'invention EM1 (réalisé à partir de la même fritte d'émail F1) montre que la formulation sous forme de barbotine conduit à une moins bonne résistance à une attaque acide, qui se manifeste par une décoloration de l'émail.

## Revendications

1. Article culinaire (1, 10) comprenant une calotte creuse définissant un fond (3, 30) et une paroi latérale (4, 40) s'élevant à partir dudit fond (3, 30), ladite calotte présentant une face intérieure (1a) pouvant recevoir des aliments et une face extérieure (1b, 10b) destinée à être disposée du côté de la source de chaleur, ladite calotte comportant une feuille (5) en aluminium ou en alliage d'aluminium,
**caractérisé en ce que** la face extérieure (1b, 10b) au moins de la paroi latérale (4, 40) est en aluminium anodisé ou en alliage d'aluminium anodisé,
**en ce que** la face extérieure (1b, 10b) du fond (3, 30) est recouverte au moins en partie par une couche d'émail (8, 80) ayant une épaisseur sensiblement uniforme dont la valeur moyenne est comprise entre 15 et 40 µm avec un écart par rapport à cette valeur moyenne d'épaisseur d'au plus 10%, et
**en ce que** ladite couche d'émail (8, 80) comprend 1,5 à 9 % en poids par rapport au poids total de la couche d'émail d'au moins un élément fondant choisi dans le groupe constitué par l'oxyde de plomb PbO, l'oxyde de bismuth Bi₂O₃ et le pentoxyde de vanadium V₂O₅.

2. Article culinaire (1, 10) selon la revendication 1, **caractérisé en ce que** ladite couche d'émail (8, 80) comprend 2 à 7 % en poids par rapport au poids total de la couche d'émail (8,80) d'oxyde de vanadium.

3. Article culinaire (1, 10) selon la revendication 1 ou 2, **caractérisé en ce que** la face intérieure (1a) de l'article culinaire (1, 10) est pourvue d'un revêtement anti-adhésif (6) qui est disposé de manière à être en contact direct avec la feuille d'aluminium (5).

4. Article culinaire (1, 10) selon la revendication 3, **caractérisé en ce que** le revêtement anti-adhésif (6) est obtenu à partir d'une composition comprenant une résine thermostable résistant à au moins 200°C.

5. Article culinaire (1, 10) selon la revendication 4, **caractérisé en ce que** la résine thermostable résistant à au moins 200°C est une résine silicone ou une résine fluorocarbonée telle que du PTFE.

6. Article culinaire (1, 10) selon l'une quelconque des revendications précédentes, **caractérisé en ce que** la feuille (5) est une feuille emboutie présentant la forme finale de l'article (1, 10).

7. Article culinaire (1, 10) selon l'une quelconque des revendications précédentes, **caractérisé en ce que** la face extérieure (1b, 10b) du fond (3, 30) comprend une plaque (7, 70) centrée sur le fond (3, 30) et recouvrant au moins une portion (5a) de la feuille (5), la plaque (7, 70) étant réalisée en un métal ou en un matériau revêtu d'un métal, d'un carbure ou d'un nitrure d'un métal, ledit métal étant choisi de manière à résister à une étape d'anodisation.

8. Article culinaire (1, 10) selon l'une quelconque des revendications précédentes, **caractérisée en ce que** le métal de la plaque (7, 70) est choisi parmi les métaux de transition tels que le titane, le zirconium ou le niobium, le matériau qui en constitue, le cas échéant, le coeur qui est alors recouvert du dit métal ou d'un carbure ou d'un nitrure de ce même métal, étant choisi parmi l'acier, l'acier inoxydable, ferritique ou non.

9. Article culinaire (1, 10) selon l'une quelconque des revendications précédentes, **caractérisée en ce que** le fond (3, 30) de l'article culinaire (1, 10) étant légèrement concave, la zone du fond (3, 30) destinée à être en contact avec la source de chaleur est intégralement revêtue par la couche d'émail (8, 80).

10. Article culinaire (1, 10) selon l'une quelconque des revendications précédentes, **caractérisé en ce que** la face extérieure (1b, 10b) de la paroi latérale (4, 40) est partiellement recouverte par une couche d'émail discontinue formant un décor.

11. Procédé de fabrication d'un article culinaire (1, 10) comprenant un fond (3, 30) et une paroi latérale (4, 40) se dressant à partir du fond (3, 30) en aluminium ou en alliage d'aluminium, ledit procédé comprenant les étapes suivantes :
a) mise en forme, par emboutissage, d'une feuille (5) en aluminium ou en alliage d'aluminium pour lui conférer la forme finale de l'article culinaire (1, 10) et ainsi définir la face intérieure (1a) de l'article culinaire (1, 10), destinée à la cuisson des aliments, et la face extérieure (1b, 10b) de l'article culinaire (1, 10) destinée à être disposée du côté de la source de chaleur;
b) une étape de réalisation d'une couche d'émail (8, 80) sur toute ou partie de la face extérieure (1b, 10b) du fond (3, 30) de l'article culinaire (1, 10), et
c) une étape c) d'anodisation de l'article culinaire (1, 10),
ledit procédé étant **caractérisé en ce que** ladite étape b) de réalisation de la couche d'émail (8, 80) est réalisée avant l'étape d'anodisation et constitue l'unique étape d'émaillage de la face extérieure du fond de l'article culinaire, ladite étape b) comportant les étapes successives suivantes:
i) préparation d'une pâte anhydre à partir d'une fritte d'émail pulvérulente qui comprend 0,82 à 6, 75 %, par rapport au poids total de la pâte d'au moins un élément fondant choisi dans le groupe constitué par l'oxyde de plomb PbO, l'oxyde de bismuth Bi₂O₃ et le pentoxyde de vanadium V₂O₅, ladite pâte étant formulée
sous forme d'une dispersion dans un milieu non aqueux, de préférence un milieu huileux ou un solvant;
ii) application de ladite pâte anhydre sur ladite face extérieure (1b, 10b) du fond (3, 30) en au moins une couche de pâte;
iii) cuisson de la couche de pâte à une température comprise entre 540°C et 575°C, de préférence à une température d'environ 560°C, pour former une couche d'émail (8, 80) qui présente après cuisson une épaisseur sensiblement uniforme dont la valeur moyenne est comprise entre 15 et 40 µm avec un écart par rapport à cette valeur moyenne d'épaisseur d'au plus 10%.

12. Procédé selon la revendication 11, **caractérisé en ce que** ladite pâte anhydre comprend 55 à 75 %, de préférence 65 % en poids de fritte d'émail pulvérulente par rapport au poids total de la pâte anhydre.

13. Procédé selon la revendication 11 ou 12, **caractérisé en ce que** la fritte d'émail comprend :
○ SiO₂ : 30 à 38 % ;
○ V₂O₅ : 3 à 7 % ;
○ NaOH : 15 à 25 % ;
○ LiOH : 0.5 à 4 % ;
○ KOH : 8 à 17 % ;
○ TiO₂ : 18 à 25 % ;
les teneurs indiquées étant des pourcentages en poids par rapport au poids de la fritte.

14. Procédé selon l'une quelconque des revendications 11 à 13, **caractérisé en ce que** la pâte présente une viscosité de 2000 à 8000 cP, et en **en ce que** la pâte anhydre est appliquée par sérigraphie ou par tampographie.

15. Procédé selon l'une quelconque des revendications 11 à 14, **caractérisé en ce que** l'on applique la pâte anhydre en monocouche, pour former une couche d'émail présentant après cuisson une épaisseur comprise entre 15 et 30 µm.

16. Procédé selon l'une quelconque des revendications 11 à 14, **caractérisé en ce que** l'on applique la pâte anhydre en bicouche, pour former une couche d'émail présentant après cuisson une épaisseur comprise entre 25 et 40 µm.

17. Procédé selon l'une quelconque des revendications 11 à 16, **caractérisé en ce qu'**après l'étape a) de mise en forme de la feuille (5) et avant l'étape b) de réalisation d'une couche d'émail (8, 80) sur la face extérieure (1b, 10b) du fond (3, 30), on procède à l'application par matriçage sur la face extérieure (1b, 10b) du fond (3, 30), d'une plaque (7, 70) destinée à recouvrir une portion (5a) de la feuille (5), ladite plaque (7, 70) étant réalisée en un métal ou en un matériau revêtu d'un métal ou d'un carbure ou d'un nitrure de ce même métal, ledit métal étant choisi de manière que la plaque (7, 70) résiste à l'étape c) d'anodisation.

18. Procédé selon l'une quelconque des revendications 11 à 17, **caractérisé en ce que** l'on procède, après l'étape b) de réalisation d'une couche d'émail (8, 80) sur toute ou partie de la face extérieure (1b, 10b) dudit article (1, 10 et avant l'étape c) d'anodisation dudit article (1, 10), au dépôt sur la face intérieure (1a) de l'article (1, 10) d'au moins une couche destinée à former, après cuisson, un revêtement anti-adhésif (6).

## Claims

1. An item of cookware (1, 10) comprising a dish-shaped body defining a base (3, 30) and a side wall (4, 40) rising from said base (3, 30), said dish-shaped body having an inner surface (1a) capable of receiving foodstuffs and an outer surface (1b, 10b) designed to be placed next to the heat source, said dish-shaped body comprising a sheet (5) made of aluminium or aluminium alloy,
**characterized in that** the outer surface (1b, 10b) at least of the side wall (4, 40) is made of anodized aluminium or anodized aluminium alloy,
**in that** the outer surface (1b, 10b) of the base (3, 30) is covered at least in part with a layer of enamel (8, 80) of substantially uniform thickness, its mean value being between 15 and 40 µm with a deviation from said mean thickness value of at most 10 %, and
**in that** said layer of enamel (8, 80) includes 1.5 to 9 % by weight, relative to the total weight of the layer of enamel, of at least one flux element selected from the group made up of lead oxide PbO, bismuth oxide Bi₂O₃ and vanadium pentoxide V₂O₅.

2. An item of cookware (1, 10) according to Claim 1, **characterized in that** said layer of enamel (8, 80) includes 2 to 7 % by weight, relative to the total weight of the enamel layer (8, 80), of vanadium oxide.

3. An item of cookware (1, 10) according to Claim 1 to 2, **characterized in that** the inner surface (1a) of the item of cookware (1, 10) is provided with a non-stick coating (6) formed in such a way as to be in direct contact with the aluminium sheet (5).

4. An item of cookware (1, 10) according to Claim 3, **characterized in that** the non-stick coating (6) is obtained from a composition comprising a thermostable resin resistant to at least 200°C.

5. An item of cookware (1, 10) according to Claim 4, **characterized in that** the thermostable resin, resistant to at least 200°C, is a silicone resin or a fluorocarbon resin such as PTFE.

6. An item of cookware (1, 10) according to any one of the preceding claims, **characterized in that** the sheet (5) is a stamped sheet having the final shape of the item (1, 10).

7. An item of cookware (1, 10) according to any one of the preceding claims, **characterized in that** the outer surface (1b, 10b) of the base (3, 30) comprises a plate (7, 70), centred on the base (3, 30) and covering at least a portion (5a) of the sheet (5), the plate (7, 70) being made of a metal or of a material coated with a metal, a carbide or a nitride of a metal, said metal being selected so as to withstand an anodization step.

8. An item of cookware (1, 10) according to any one of the preceding claims, **characterized in that** the metal of the plate (7, 70) is selected from among the transition metals, such as titanium, zirconium or niobium, the material forming, if applicable, the core of said plate, which is then covered with said metal or a carbide or a nitride of this same metal, being selected from steel or stainless steel, whether ferritic or non-ferritic.

9. An item of cookware (1, 10) according to any one of the preceding claims, **characterized in that** the base (3, 30) of the item of cookware (1, 10) being slightly concave, the area of the base (3, 30) designed to be in contact with the heat source is completely covered with the enamel layer (8, 80).

10. An item of cookware (1, 10) according to any one of the preceding claims, **characterized in that** the outer surface (1b, 10b) of the side wall (4, 40) is partly covered with a discontinuous layer of enamel forming a decoration.

11. A method of manufacturing an item of cookware (1, 10) comprising a base (3, 3 0) and a side wall (4, 40) rising from the base (3, 30) made of aluminium or of aluminium alloy, said method comprising the following steps:
a) shaping, by stamping, a sheet (5) made of aluminium or aluminium alloy so as to give it the final shape of the item of cookware (1, 10) and thus define the inner surface (1a) of the item of cookware (1, 10) designed for cooking foodstuffs, and the outer surface (1b, 10b) of the item of cookware (1, 10) designed to be placed next to the heat source;
b) forming a layer of enamel (8, 80) over all or part of the outer surface (1b, 10b) of the base (3, 30) of the item of cookware (1, 10), and
c) anodizing the item of cookware (1, 10),
said method being **characterized in that** said step b) for forming the layer of enamel (8, 80) is carried out prior to the anodization step and constitutes the only enamelling step in respect of the outer surface of the base of the item of cookware, said step b) comprising the following successive steps:
i) preparation of an anhydrous paste from a powdery enamel frit including 0.82 to 6.75 % relative to the total weight of the paste of at least one flux element selected from the group consisting of lead oxide PbO, bismuth oxide Bi₂O₃ and vanadium pentoxide V₂O₅, said paste being formulated in the form of a dispersion in a non-aqueous medium, preferably an oily medium or a solvent;
ii) application of said anhydrous paste onto said outer surface (1b, 10b) of the base (3, 30) in at least one layer of paste;
iii) firing of the layer of paste at a temperature of between 540°C and 575°C, and preferably at a temperature of approximately 560°C, so as to form a layer of enamel (8, 80) which has, after firing, a substantially uniform thickness, the mean value of which is between 15 and 40 µm with a deviation from said mean thickness value of at most 10 %.

12. A method according to Claim 11, **characterized in that** said anhydrous paste includes 55 to 75 %, and preferably 65 %, by weight of powdery enamel frit relative to the total weight of the anhydrous paste.

13. A method according to Claim 11 or 12, **characterized in that** the enamel frit comprises:
○ SiO₂: 30 to 38 % ;
○ V₂O₅: 3 to 7 %;
○ NaOH : 15 to 25 %;
○ LiOH : 0.5 to 4 %;
○ KOH : 8 to 17 %;
○ TiO₂ : 18 to 25 %;
the contents specified being percentages by weight relative to the weight of the frit.

14. A method according to any one of Claims 11 to 13, **characterized in that** the paste has a viscosity of 2000 to 8000 cP, **and in that** the anhydrous paste is applied by serigraphy or tampography.

15. A method according to any one of Claims 11 to 14, **characterized in that** the anhydrous paste is applied in a single layer to form a layer of enamel which, after firing, has a thickness of between 15 and 30 µm.

16. A method according to any one of Claims 11 to 14, **characterized in that** the anhydrous paste is applied in two layers to form a layer of enamel which, after firing, has a thickness of between 25 and 40 µm.

17. A method according to any one of Claims 11 to 16, **characterized in that**, after step a) for shaping the sheet (5) and prior to step b) for forming a layer of enamel (8, 80) on the outer surface (1b, 10b) of the base (3, 30), a plate (7, 70) designed to cover a portion (5a) of the sheet (5) is applied over the outer surface (1b, 10b) of the base (3, 30) by a die stamping process, said plate (7, 70) being made of a metal or of a material coated with a metal or a carbide or a nitride of this same metal, said metal being selected so that the plate (7, 70) withstands the anodization step c).

18. A method according to any one of Claims 11 to 17, **characterized in that**, after step b) for forming a layer of enamel (8, 80) over all or part of the outer surface (1b, 10b) of said item (1, 10) and prior to step c) for anodizing said item (1, 10), at least one layer designed to form, after firing, a non-stick coating (6) is deposited over the inner surface (1a) of the item (1, 10).

## Patentansprüche

1. Kochartikel (1, 10) mit einer tiefen Schale, welche einen Boden (3, 30) und eine Seitenwand (4, 40) bildet, die sich ausgehend vom Boden (3, 30) erhebt, wobei die Schale einen Innenseite (1a) aufweist, die Lebensmittel aufnehmen kann, und eine Außenseite (1b, 10b), die in Richtung der Wärmequelle angeordnet sein soll, wobei die Schale eine Folie (5) aus Aluminium oder eine Alumiztiumlegierung umfasst,
**dadurch gekennzeichnet, dass** die Außenseite (1b, 10) wenigstens der Seitenwand (4, 40) aus anodisch oxidiertem Aluminium oder einer anodisch oxidierten Aluminiumlegierung besteht,
dass die Außenseite (1b, 10b) des Bodens (3, 30) wenigstens teilweise durch eine Emailleschicht (8, 80) überdeckt ist, die eine im Wesentlichen gleichförmige Dicke hat, deren Mittelwert zwischen 15 und 40 µm liegt, mit einer Abweichung gegenüber diesem Dicken-Mittelwert von höchstens 10%, und
dass die Emailleschicht (8, 80) 1,5 bis 9 Gew.% in Bezug zum Gesamtgewicht der Emailleschicht wenigstens ein Zuschlagelements umfasst, ausgewählt aus der Gruppe bestehend aus Bleioxid PbO, Wismutoxid Bi₂O₃ und Vanadiumpentoxid V₂O₅.

2. Kochartikel (1, 10) nach Anspruch 1, **dadurch gekennzeichnet, dass** die Emailleschicht (8, 80) 2 bis 7 Gew. % Vanadiumoxid in Bezug zu dem Gesamtgewicht der Emailleschicht (8, 80) umfasst.

3. Kochartikel (1, 10) nach Anspruch 1 oder 2, **dadurch gekennzeichnet, dass** die Innenseite (1a) des Kochartikels (1, 10) mit einer Antihaftbeschichtung (6) versehen ist, die derart angeordnet ist, dass diese sich in direktem Kontakt mit der Aluminiumfolie (5) befindet.

4. Kochartikel (1, 10) nach Anspruch 3, **dadurch gekennzeichnet, dass** die Antihaftbeschichtung (6) ausgehend von einer Zusammensetzung erhalten wird, die ein wärmestabiles Harz umfasst, das wenigstens 200°C verträgt.

5. Kochartikel (1, 10) nach Anspruch 4, **dadurch gekennzeichnet, dass** das wenigstens 200°C vertragende thermostabile Harz ein Silikonharz oder ein Fluorkohlenstoffharz, wie PTFE, ist.

6. Kochartikel (1, 10) nach einem der vorhergehenden Ansprüche, **dadurch gekennzeichnet, dass** die Folie (5) eine gezogene Folie ist, welche die endgültige Form des Artikels (1, 10) aufweist.

7. Kochartikel (1, 10) nach einem der vorhergehenden Ansprüche, **dadurch gekennzeichnet, dass** die Außenseite (16, 10b) des Bodens (3, 30) eine Platte (7, 70) umfasst, die über dem Boden (3, 30) zentriert ist, und wenigstens einen Bereich (5a) der Folie (5) überdeckt, wobei die Platte (7, 70) aus einem Metall oder einem mit einem Metall, einem Carbid oder einem Nitrid eines Metalls ausgeführt ist, wobei das Metall derart ausgeführt ist, dass dieses einem Schritt der anodischen Oxidation widersteht.

8. Kochartikel (1, 10) nach einem der vorhergehenden Ansprüche, **dadurch gekennzeichnet, dass** das Metall der Platte (7, 70) ausgewählt ist aus den Übergangsmetallen, wie Titan, Zirkon oder Niobium, wobei das Material, das gegebenenfalls den Kern bildet, der von diesem Metall oder einem Carbid oder einem Nitrid desselben Metalls überdeckt ist, ausgewählt ist aus Stahl, rostfreiem Stahl, ferritisch oder nicht.

9. Kochartikel (1, 10) nach einem der vorhergehenden Ansprüche, **dadurch gekennzeichnet, dass** der Boden (3, 30) des Kochartikels (1, 10) leicht konkav ist, wobei die Zone des Bodens (3, 30), die in Kontakt mit der Wärmequelle stehen soll, durch die Emailleschicht (8, 80) integral überdeckt ist.

10. Kochartikel (1, 10) nach einem der vorhergehenden Ansprüche, **dadurch gekennzeichnet, dass** die Außenseite (1b, 10b) der Seitenwand (4, 40) teilweise durch eine diskontinuierliche Emailleschicht überdeckt ist, die ein Dekor bildet.

11. Verfahren zur Herstellung eines Kochartikels (1, 10) mit einem Boden (3, 30) und einer Seitenwand (4, 40), die ausgehend vom Boden (3, 30) aus Aluminium oder einer Aluminiumlegierung ausgerichtet ist, wobei das Verfahren die folgenden Schritte umfasst:
a) Formen durch Tiefziehen einer Folie (5) aus Aluminium oder einer Aluminiumlegierung, um dieser die endgültige Form des Kochartikels (1, 10) zu verleihen und somit die Innenseite (1a) des Kochartikels (1, 10), welche zum Kochen von Lebensmitteln bestimmt ist, und die Außenseite (1b, 10b) des Kochartikels (1, 10), die in Richtung der Wärmequelle angeordnet sein soll, zu bilden;
b) einen Ausführungsschritt einer Emailleschicht (8, 80) über den gesamten oder einen Teil der Außenseite (1b, 10b) des Bodens (3, 30) des Kochartikels (1, 10), und
c) einen Schritt c) der anodischen Oxidation des Kochartikels (1, 10),
wobei das Verfahren **dadurch gekennzeichnet, ist, dass** der Schritt b) der Ausführung der Emailleschicht (8, 80) vor dem Schritt der anodischen Oxidation ausgeführt wird und den einzigen Emaillierungsschritt der Außenseite des Bodens des Kochartikels bildet, wobei der Schritt b) die aufeinanderfolgenden Schritte umfasst:
i) Präparierung einer wasserfreien Paste ausgehend von einer pulverisierten Emailleschmelze, die 0,82 bis 6,75% in Bezug zum Gesamtgewicht der Paste wenigstens eines Zuschlagelements umfasst, ausgewählt aus der Gruppe gebildet durch Bleioxid PbO, Wismutoxid Bi₂O₃ und Vanadiumpentoxid V₂O₅, wobei die Paste in Form einer Dispersion in nicht wässrigem Milieu formuliert ist, vorzugsweise in ölhaltigem Milieu oder in einem Lösungsmittel;
ii) Aufbringen der wasserfreien Paste auf die Außenseite (1b, 10b) des Bodens (3, 30) in wenigstens einer Pastenschicht;
iii) Brennen der Pastenschicht bei einer Temperatur zwischen 540°C und 575°C, vorzugsweise einer Temperatur von ungefähr 560°C, um eine Emailleschicht (8, 80) zu bilden, die nach dem Brennen eine im Wesentlichen gleichförmige Dicke aufweist, deren Mittelwert zwischen 15 und 40 µm mit einer Abweichung in Bezug zu diesem Dickenmittelwert von nicht mehr als 10% umfasst.

12. Verfahren nach Anspruch 11, **dadurch gekennzeichnet, dass** die wasserfreie Paste 55 bis 75%, vorzugsweise 65 Gew.% der pulverisierten Emailleschmelze in Bezug zum Gesamtgewicht der wasserfreien Paste umfasst.

13. Verfahren nach Anspruch 11 oder 12, **dadurch gekennzeichnet, dass** die Emailleschmelze umfasst:
○ SiO₂ : 30 bis 38%;
○ V₂O₅ : 3 bis 7%;
○ NaOH : 15 bis 25%;
○ LiOH : 0,5 bis 4%;
○ KOH : 8 bis 17 %;
○ TiO₂ : 18 bis 25%;
wobei die angegebenen Gehalte Gewichtsprozente gegenüber dem Gewicht der Schmelze sind.

14. Verfahren nach einem der Ansprüche 11 bis 13, **dadurch gekennzeichnet, dass** die Paste eine Viskosität von 2000 bis 8000 cP aufweist, und dass die wasserfreie Paste durch Siebdruck oder durch Tampografie aufgebracht wird.

15. Verfahren nach einem der Ansprüche 11 bis 14, **dadurch gekennzeichnet, dass** die wasserfreie Paste als Monoschicht aufgebracht wird, um eine Emailleschicht zu bilden, die vor dem Brennen eine Dicke zwischen 15 und 30 µm aufweist.

16. Verfahren nach einem der Ansprüche 11 bis 14, **dadurch gekennzeichnet, dass** die wasserfreie Paste als Doppelschicht aufgebracht wird, um eine Emailleschicht zu bilden, die nach dem Brennen eine Dicke zwischen 25 und 40 µm aufweist.

17. Verfahren nach einem der Ansprüche 11 bis 16, **dadurch gekennzeichnet, dass** nach dem Schritt a) der Formung der Folie (5) und vor dem Schritt b) der Ausführung einer Emailleschicht (8, 80) auf der Außenseite (1b, 10b) des Bodens (3, 30), eine Aufbringung durch Gesenkformung auf die Außenseite (1b, 10b) des Bodens (3, 30) einer Platte (7, 70) durchgeführt wird, die einen Bereich (5a) der Folie (5) abdecken soll, wobei die Platte (7, 70) aus einem Metall oder einem mit einem Metall oder einem Carbid oder einem Nitrid dieses Metalls beschichteten Material ausgeführt ist, wobei das Metall derart ausgewählt wird, dass die Platte (7, 70) dem Schritt c) der anodischen Oxidation widersteht.

18. Verfahren nach einem der Ansprüche 11 bis 17, **dadurch gekennzeichnet, dass** nach dem Schritt b) der Ausführung einer Emailleschicht (8, 80) auf die gesamte oder einen Teil der Außenseite (1b, 10b) des Artikels (1, 10) und vor dem Schritt c) der anodischen Oxidation des Artikels (1, 10) eine Ablagerung auf der Innenseite (1a) des Artikels (1, 10) wenigstens einer Schicht durchgeführt wird, die nach dem Brennen eine Antihaftbeschichtung (6) bilden soll.
